# FASCICULE DE BREVET EUROPEEN

(11) **EP 1 919 660 B1**
(45) Date de publication et mention de la délivrance du brevet: **08.04.2009**
(21) Numéro de dépôt: 05775626.4
(22) Date de dépôt: 02.09.2005
(51) Int. Cl.: B23Q 17/22, B23Q 17/24, G02B 23/24, B23B 25/06

(54) **DISPOSITIF DE REGLAGE DE LA POSITION D'OUTILS DANS UN TOUR AUTOMATIQUE**
VORRICHTUNG ZUM EINSTELLEN DER POSITION VON WERKZEUGEN IN EINEM DREHAUTOMATEN
DEVICE FOR ADJUSTING THE POSITION OF TOOLS IN AN AUTOMATIC LATHE

(43) Date de publication de la demande: 14.05.2008
(73) Titulaire: Monnin SA, 2605 Sonceboz-Sombeval (CH)
(72) Inventeur: MONNIN, Jean-Charles, 2605 Sonceboz-Sombeval (CH)
(74) Mandataire: North, Mathieu
(86) Numéro de dépôt international: PCT/CH2005/000524
(87) Numéro de publication internationale: WO 2007/025393

(56) Documents cités:
- EP-A- 0 609 093
- DE-A1- 10 359 337
- US-A1- 2002 002 885
- US-B1- 6 540 668
- PATENT ABSTRACTS OF JAPAN vol. 2003, no. 12, 5 décembre 2003 (2003-12-05) & JP 2003 340688 A (MATSUSHITA ELECTRIC IND CO LTD), 2 décembre 2003 (2003-12-02)

## Description

### Domaine technique

La présente invention a trait au réglage de la position des outils, qu'il s'agisse d'outils de coupe comme des burins, ou d'outils en bout comme des mèches de perçage, par rapport à l'axe central de l'alésage du canon de guidage de la pièce à traiter, généralement une barre de métal, d'un tour automatique, encore appelé « décolleteuse », à poupée, mobile ou fixe.

### Technique antérieure

L'importante évolution des tours automatiques, et particulièrement des tours automatiques à poupée mobile, ou décolleteuses, fait qu'il existe aujourd'hui des machines de production de très hautes performances. Ces machines permettent d'usiner des pièces complexes en respectant des tolérances dimensionnelles et géométriques toujours plus serrées. Toutefois, afin d'atteindre de telles précisions, des moyens de pré-réglage de la position des outils de plus en plus précis et fiables sont indispensables. Ces moyens de pré-réglage consistent principalement en des bancs de mesure constitués d'un posage qui permet d'accueillir l'outil de coupe avec son porte-outil ainsi que des comparateurs (mesure avec contact) ou un projecteur muni d'un système de mesure (mesure sans contact) qui offrent la possibilité de définir et de relever les coordonnées de la pointe de l'outil de coupe ou en bout dans un plan (X, Y, par exemple), voire dans l'espace (X,Y,Z, par exemple).

Cependant, la précision de l'alignement de l'outil une fois monté sur la machine n'est de loin pas satisfaisante. Les erreurs d'alignement proviennent des imprécisions entre le posage du banc de mesure et le posage du porte-outil dans le tour automatique, de la qualité de l'alésage du canon de guidage de la barre à traiter ainsi que de la position réelle du centre du canon de guidage qui est différente lors de chaque mise en train de la machine. Or, dans les tours automatiques, c'est le canon de guidage qui guide et définit précisément la position de la barre de matière à usiner. Ces erreurs d'alignement ont un ordre de grandeur de 15 µm à 20 µm et, par conséquent, engendrent une usure rapide des outils, des forces d'usinage plus grandes qui sont très défavorables pour des pièces de petits diamètres, des diamètres de perçage plus grands que le diamètre de la mèche utilisée ainsi qu'une mauvaise répétabilité des cotes d'usinage.

La demande de brevet JP 2002154485 Matsushita Electric (publication 2003340688) fournit une solution qui permet de mesurer la hauteur de l'arête de coupe d'un outil en laissant celui-ci monté sur un support sur la machine. Une mèche est montée dans le canon de guidage. Le porte-outil est mû en direction de cette mèche qui, au moment du contact, fore un trou de faible profondeur sur le porte-outil. Cette marque constitue un point de référence. On fixe alors dur l'extérieur du canon de guidage rotatif, après avoir apparemment enlevé la mèche qui a foré le point de référence, une caméra CCD, dont l'objectif est dirigé sur le porte-outil et sur le point de référence. L'image prise par la camera est transmise à un ordinateur et permet de comparer la hauteur de l'arête de coupe de l'outil à la hauteur du point de référence. Il est ainsi possible d'ajuster la hauteur de l'arête de coupe alors que l'outil et le porte-outil sont toujours fixés sur la table mobile.

Si cette méthode permet sans doute de supprimer un facteur d'imprécision, il reste que la mesure dépend d'une part de la précision du forage du trou constituant le point de référence, et d'autre part de la de la précision avec laquelle la camera est fixées sur l'extension du canon de guidage. Elle exige en outre le montage d'une mèche, l'opération de forage, le retrait subséquent de la mèche, puis le montage de la camera, pour arriver enfin à la mesure de la hauteur.

On connaît par ailleurs, dans le domaine médical, des endoscopes dont une extrémité est pourvue d'un tube d'extension que l'on peut insérer dans le corps du patient, et dont l'autre extrémité permet, grâce à un système de lentilles, de regarder à l'intérieur du corps. Une camera CCD peut être fixée à cette extrémité, et permet de transmettre une image. Un tel endoscope est décrit dans le brevet US 6 540 668 Schulz. Un dispositif du même genre est décrit dans DE 103 59 337 Blazejewski Medi-Tech GmbH, sans camera, mais avec un dispositif d'éclairage. De tels endoscopes peuvent utiliser, par exemple, des lentilles à gradient d'indice achromates, comme cela est décrit par exemple dans EP 0 609 093 Gradient Lens Corporation.

La présente invention propose un nouveau procédé et un nouveau dispositif de pré-réglage de la position des outils de coupe ou en bout, en utilisant tout ou partie des éléments révélés dans les documents cités plus haut et relatifs à des endoscopes, non employés précédemment à cette fin. Ces nouveaux procédé et dispositif optique de pré-réglage des outils de coupe ou en bout permettent d'aligner et de référencer les outils par rapport à l'axe du canon de guidage d'un tour automatique, notamment à poupée mobile, directement dans la machine. L'invention vise ainsi à offrir la possibilité de s'affranchir des erreurs d'alignement des outils par rapport à l'axe du canon de guidage, qu'il s'agisse d'un tour automatique à poupée mobile ou fixe.

### Exposé de l'invention

De manière générale, l'invention propose un procédé nouveau et un nouveau dispositif optique de pré-réglage des outils de coupe ou en bout, dont au moins une partie apte à transmettre des images, de par sa conception et sa construction, c'est-à-dire en définitive par sa forme, peut être introduite à l'intérieur d'un canon de guidage de la barre à traiter d'un tour automatique, notamment à poupée mobile. Cette partie du dispositif est maintenue dans le canon de guidage de la pièce à traiter par la pince du système de serrage de la poupée. Du fait que le dispositif est au moins partiellement placé à l'intérieur du canon, il permet d'observer simultanément le diamètre de l'alésage de guidage et l'outil, de coupe ou en bout, qui aura été positionné préalablement devant le canon de guidage.

Ce dispositif optique est destiné à acquérir des images par un ordinateur et sur un écran de visualisation, ce qui permettra à l'opérateur de prendre les références et d'aligner l'outil par rapport au diamètre de l'alésage du canon de guidage du tour automatique. Une couronne de diodes électroluminescentes est montée à l'avant du canon de guidage pour procurer un éclairage optimal.

Le procédé selon l'invention est un procédé de réglage optique de la position des outils de coupe ou en bout par rapport à l'axe central de l'alésage du canon de guidage de la pièce à traiter d'un tour à l'aide d'au moins une camera placée sur ledit canon de guidage et apte à transmettre l'image captée, caractérisé en ce que le tour est automatique, en ce que la camera est pourvue d'au moins un tube d'extension muni d'au moins une lentille et en ce qu'au moins le tube d'extension est introduit dans l'alésage du canon de guidage de façon que ledit tube d'extension soit dirigé vers le ou les outils de coupe ou en bout de façon à transmettre à la camera l'image de l'ouverture dudit canon de guidage et l'image de la partie desdits outils de coupe ou en bout visible par l'ouverture du canon de guidage.

Dans sa forme générale, le dispositif optique de réglage des outils de coupe ou en bout d'un tour automatique par rapport à l'axe central de l'alésage du canon de guidage de la pièce à traiter, objet de l'invention, comprend au moins une camera et un ordinateur, et est caractérisé en ce que ladite camera est pourvue d'au moins un tube d'extension muni d'au moins une lentille et apte à être placé dans l'alésage du canon de guidage, de façon que ledit tube d'extension soit dirigé vers le ou les outils de coupe ou en bout, la camera étant en outre pourvue de moyens aptes à transmettre audit ordinateur l'image de l'ouverture dudit canon de guidage en direction desdits outils de coupe ou en bout et l'image de la partie desdits outils de coupe ou en bout visible par l'ouverture du canon de guidage, ledit ordinateur étant programmé de façon à permettre l'enregistrement de la position d'au moins un point de référence de l'image de ladite ouverture du canon et à faire apparaître ledit point sur un écran, permettant ainsi le positionnement des outils par rapport audit point de référence.

Dans une première forme d'exécution particulière du dispositif objet de l'invention, le dispositif est caractérisé en ce le tube d'extension comprend au moins une lentille à gradient d'indice.

Dans une deuxième forme particulière, applicable à la forme générale et à la forme d'exécution particulière précédente, le dispositif est caractérisé en ce qu'il comprend au moins une lentille achromate placée entre le tube d'extension et la camera.

Dans une troisième forme particulière, applicable à la forme générale et aux formes d'exécution particulières précédentes , le dispositif est caractérisé en ce que la camera est pourvue d'un capteur CCD.

Dans une quatrième forme particulière, applicable à la forme générale et aux formes d'exécution particulières précédentes, le dispositif est caractérisé en ce qu'il comprend des moyens permettant de déplacer la camera dans la direction de l'axe de montage des lentilles.

Dans une cinquième forme particulière, applicable à la forme générale et aux formes d'exécution particulières précédentes , le dispositif est caractérisé en ce que le point de référence coïncide avec l'axe central du canon de guidage.

Dans une sixième forme particulière, applicable à la forme générale et aux formes d'exécution particulières précédentes, le dispositif est caractérisé en ce que l'ordinateur est programmé de façon à afficher à l'écran une mire comprenant deux axes orthogonaux formant un système de coordonnées cartésiennes.

Dans une septième forme particulière, applicable à la sixième, le dispositif est caractérisé en ce que l'ordinateur est programmé pour enregistrer et/ou afficher la position de l'arête tranchante d'au moins un outil de coupe selon le système de coordonnées cartésiennes.

Dans une huitième forme particulière, à la forme générale et aux formes d'exécution particulières précédentes, le dispositif est caractérisé en ce que l'ordinateur est programmé pour enregistrer et/ou afficher la position de l'axe de rotation d'au moins un outil en bout, et notamment d'une mèche de perçage, selon le système de coordonnées cartésiennes.

Dans une neuvième forme particulière, applicable à la forme générale et aux formes d'exécution particulières précédentes , le dispositif est caractérisé en ce que le point de référence est le centre d'un cercle dont la circonférence est positionnée de façon à être tangent ou à se superposer aux arcs de cercle formés par l'image de la face intérieure des mors de la pince du canon de guidage.

Dans une dixième forme particulière, applicable aux sixième à neuvième formes d'exécution particulières ci-dessus, le dispositif est **caractérisé en ce que** le point de référence est le point d'origine du système de coordonnées cartésiennes.

Dans une onzième forme particulière, applicable à la forme générale et aux première à septième, ainsi qu'aux neuvième et dixième formes précédentes, le dispositif est caractérisé en ce qu'il comprend un éclairage à diodes électroluminescentes placé derrière le ou les outils de coupe par rapport à la caméra.

Dans une douzième forme particulière, applicable à la huitième précédente, le dispositif est caractérisé en ce qu'il comprend un éclairage à diodes électroluminescentes, chaque diode étant placée sur un plan perpendiculaire à l'axe central de l'alésage du canon de guidage, ledit plan étant situé devant l'outil en bout par rapport à la caméra.

Dans une treizième forme particulière, applicable à la forme générale et aux formes d'exécution particulières précédentes , le dispositif est caractérisé en ce que les surfaces internes du tube d'extension, du jeu de lentilles et du boîtier de la camera sont traitées de façon à minimiser les réflexions internes.

Dans une quatorzième forme particulière, applicable à la précédente, le dispositif est caractérisé en ce que le traitement de surface est l'eloxage.

Dans une quinzième forme particulière, applicable à la forme générale et aux formes d'exécution particulières précédentes , le dispositif est caractérisé en ce qu'il comprend au moins une douille de guidage apte à entourer le bout du tube d'extension et dont le diamètre extérieur correspond à l'alésage défini par les mors de la pince du canon de guidage.

### Description sommaire des dessins

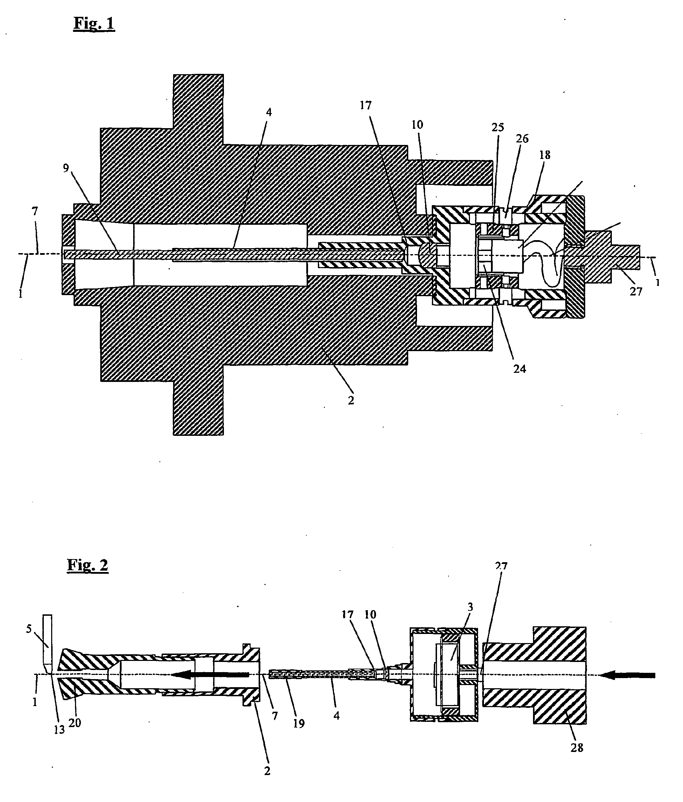

La figure 1 est une coupe longitudinale d'un dispositif selon l'invention, dans lequel le canon de guidage et la pince sont représentés de façon schématique, et dans lequel on voit le tube d'extension de la camera insérée dans ledit canon, cependant sans douille de guidage. La pince du canon de guidage n'est pas représentée.
La figure 2 est une coupe longitudinale d'un dispositif selon l'invention, dans une forme d'exécution un peu différente de celle de la figure 1, la camera étant de dimensions plus grandes, et avant l'introduction du tube d'extension dans l'alésage du canon de guidage, le tube d'extension portant une douille de guidage et un outil de coupe se trouvant devant l'ouverture dudit alésage.

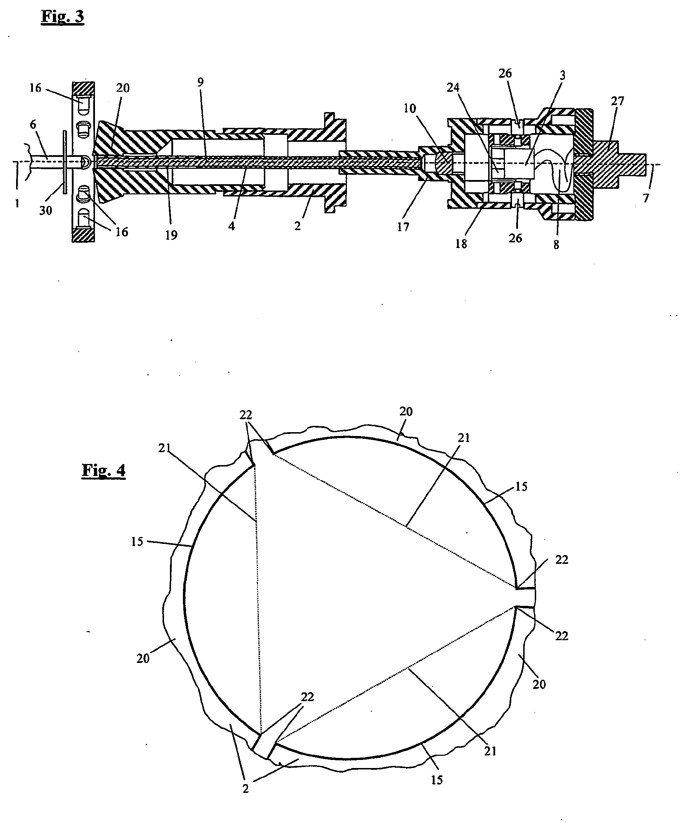

La figure 3 est une coupe longitudinale d'un dispositif selon l'invention, dans la même forme d'exécution que celle de la figure 1, mais dans laquelle la pince du canon de guidage est représentée, alors que le corps même du canon de guidage ne l'est pas. Le tube d'extension, muni d'une douille de guidage, est introduit dans l'alésage du canon de guidage, un outil en bout, qui est ici une mèche, étant placé devant l'ouverture dudit alésage.
La figure 4 est l'image de l'intérieur du canon de guidage vers son ouverture, en direction de l'outil à positionner, telle qu'elle est transmise à la camera par le tube d'extension, et sur laquelle figurent en pointillé les trois segments de droites reliant entre eux les deux angles de chacun des trois mors de la pince du canon de guidage.

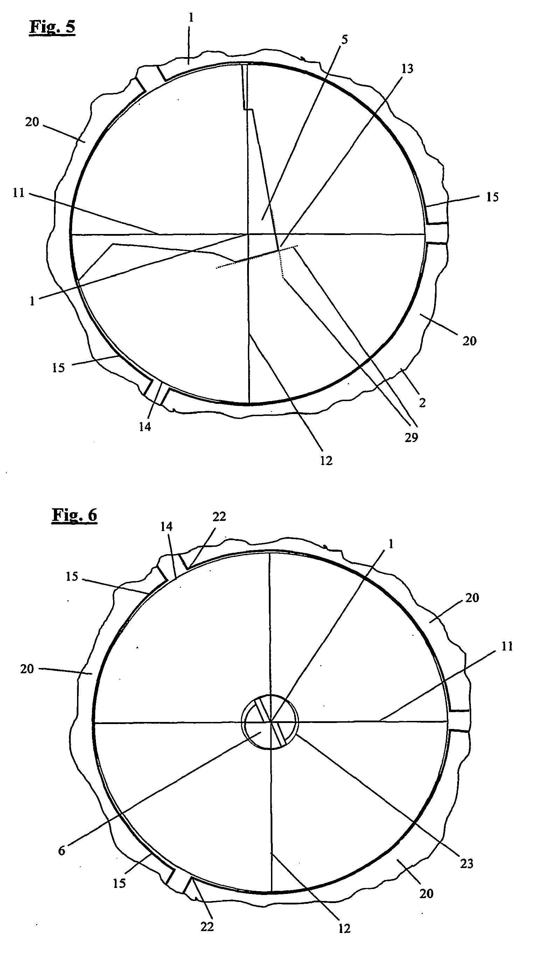

La figure 5 est la même image que celle de la figure 4, mais dans laquelle apparaît le point de référence qui est au centre du canon de guidage, centre dont la position a été acquise en fonction des trois segments de droites reliant entre eux les deux angles de chacun des mors de la pince du canon de guidage, lesdits segments de droites ayant disparu et le point de référence constituant le point d'origine d'un système de coordonnées cartésiennes, un outil de coupe apparaissant, avec en pointillé des segments de droites longeant les côtés de l'arête dudit outil et déterminant la position cette arête à leur intersection.
La figure 6 est la même image que celle de la figure 5, à la différence que l'outil de coupe est remplacé par un outil en bout, comme une mèche, et que les segments de droite ont disparu, alors que la circonférence apparente de l'outil en bout est entourée par un cercle centré au point d'origine.

### Meilleure manière de réaliser l'invention

La meilleure manière de réaliser l'invention, c'est-à-dire d'appliquer le procédé défini plus haut, consiste à utiliser le dispositif tel qu'il est représenté dans les figures 1 et 3 à 6. La meilleure forme d'exécution du dispositif selon l'invention est celle qui est représentée dans les figures 1 et 3 à 6. Le dispositif comprend de préférence une camera 3 miniature à capteur CCD, pourvue d'un tube d'extension 4. Ce tube d'extension est équipé d'une ou plusieurs lentilles, dont une 9 est à gradient d'indice. Le tube d'extension 4 est fixé sur un jeu de lentilles 17 comprenant au moins une lentille achromate 10.

La camera 3 est insérée dans un boîtier 18, et son axe correspond à l'axe 7 de montage des lentilles, qui coïncide, lui-même une fois l'ensemble optique introduit dans le canon de guidage 2, avec l'axe central 1 dudit canon. La camera est fixée sur une bague interne 24, elle-même montée dans une pièce 25 insérée dans le boîtier 18. L'ensemble formé par la camera 3, la bague 24 et la pièce 25 peut coulisser longitudinalement dans la direction de l'axe 7 de montage des lentilles, et par conséquent dans la direction de l'axe central 1 du canon de guidage. Le déplacement est guidé par deux vis à tête cylindrique 26. Le déplacement axial de la camera permet à l'opérateur de régler la netteté de l'image. Au boîtier 18 est attaché un jeu de lentilles 17, ici sous la forme d'une pièce cylindrique dont la partie adjacente au boîtier 18 a un diamètre supérieur à la partie plus éloignée dudit boîtier. La partie de la pièce cylindrique 17 au plus fort diamètre contient la lentille achromate 10, alors que la partie de plus faible diamètre contient le tube d'extension 4 dans lequel est placée la lentille à gradient d'indice 9. Cette lentille à gradient d'indice est étudiée spécialement pour l'imagerie. L'ensemble formé par la camera 3, le boîtier 18 et le jeu de lentilles 17, y compris le tube d'extension 4 et la lentille à gradient d'indice, une fois introduit dans le canon de guidage, est tenu par la poupée 28 au moyen d'un embout de fixation 27 fixé derrière le boîtier 18 et qui est saisi et maintenu pas la pince de la poupée.

A la sortie du canon de guidage, le ou les outils à positionner sont en place. A la figure 2, l'outil est un outil de coupe 5, qui a ici la forme d'un burin. A la figure 3, l'outil est un outil en bout 6, qui a ici la forme d'une mèche. La figure 2 ne montre pas comment est éclairé l'outil de coupe 5. Dans le cas des outils de coupe, l'éclairage se fait par derrière, de sorte que l'outil de coupe 5 apparaît à contre-jour dans l'ouverture du canon de guidage. L'arête 13 de l'outil se dessine ainsi en quelque sorte comme une ombre, comme cela est représenté à la figure 5. Cet éclairage par l'arrière est assuré par une série de diodes électroluminescentes blanches fixées sur une plaque elle-même placée sur la broche de contre-opération qui fait face au canon de guidage. Ce dispositif d'éclairage n'est pas montré dans les dessins. En revanche, s'agissant des outils en bout, la figure 3 montre une couronne portant une série de diodes électroluminescentes 16. La couronne est placée à la sortie du canon de guidage, avant la mèche. Celle-ci est pourvue d'une rondelle 30, de préférence de couleur claire, qui est fichée perpendiculairement sur la mèche, en son centre, et qui réfléchit ainsi la lumière, de façon que la circonférence de la mèche apparaisse nettement dans l'ouverture du canon de guidage.

Le diamètre extérieur du tube d'extension est assez petit pour permettre son introduction à l'intérieur de l'alésage du canon de guidage 2. Le bout du tube d'extension est muni d'une douille de guidage 19. Il s'agit d'un simple cylindre creux, dont le diamètre extérieur correspond à l'alésage du canon de guidage et qui entoure le bout du tube d'extension 4. Cette douille permet de centrer aussi exactement que possible le tube d'extension dans le canon de guidage et d'éviter ainsi certaines déformations de l'image qui pourraient se produire en cas de mauvais centrage, déformations qui pourraient conduire à des imprécisions dans les mesures. En pratique, le dispositif devra être livré avec une série de douilles de différents diamètres, qui correspondent aux diamètres usuels des alésages sur le marché. La ou les lentilles 9 du tube d'extension captent l'image de l'ouverture du canon de guidage en direction des outils 5 ou 6, ainsi que l'image de la partie des outils qui apparaissent dans cette ouverture. L'image est transmise à la lentille achromate 10 et passe ensuite dans la camera 3, qui la fait passer de son capteur CCD à un ordinateur, non représenté dans les dessins, par un câble 8. Cet ordinateur est programmé de façon à permettre à l'opérateur de trouver le centre du cercle formé par l'image de l'ouverture du canon, centre qui correspond à la position de l'axe 1 de l'alésage du canon de guidage 2. L'acquisition de la position de ce centre, qui est le point de référence, se fait comme suit : sur l'image de l'ouverture du canon de guidage qui apparaît sur l'écran de l'ordinateur, l'opérateur dessine un segment de droite 21 entre les deux angles 22 de l'un des mors 20 de la pince. Les caractéristiques de ce segment 21 sont enregistrées dans l'ordinateur. L'opérateur procède ensuite de la même manière pour les deux autres mors de la pince. L'ordinateur, qui est programmé à cet effet, calcule alors la position du centre de l'alésage du canon de guidage et le fait apparaître sur l'écran, au milieu d'un cercle 14 qui coïncide avec le cercle formé par l'image de l'ouverture du canon. Il faut observer ici que le verbe « coïncider » doit être entendu ici dans un sens approximatif, puisque les trois mors de la pince ne forment un véritable cercle que dans une position bien précise de serrage : comme cela est montré aux figures 5 et 6, dans la plupart des cas, les trois mors sont à une telle distance du centre que les trois arcs de cercle 15 qu'ils dessinent ne peuvent être que tangents à un cercle par le centre duquel passe l'axe du canon de guidage. L'ordinateur fait aussi apparaître deux droites orthogonales 11 et 12 qui se croisent sur le centre ainsi défini, constituant de la sorte un système de coordonnées cartésiennes dont l'origine est le centre de l'image de l'ouverture du canon de guidage et qui coïncide avec l'axe 1 du canon de guidage.

L'opérateur peut procéder ensuite à l'acquisition de la position de l'outil dans le système de coordonnées cartésiennes ainsi obtenu, et à la mesure et à l'enregistrement de la différence des coordonnées de cette position et des coordonnées de cette même position dans le système de coordonnées du tour automatique.

Pour les outils de coupe, l'acquisition de la position de l'arête 13 de l'outil 5 est faite par l'ordinateur de la manière suivante : l'ordinateur est programmé pour saisir automatiquement la position de l'intersection de deux droites qui se superposent chacune à l'un des segments formant sur l'écran l'image de l'arête. On voit à la figure 5, par des segments 29 en pointillé, comment l'ordinateur représente ce croisement. Une fois acquises, les coordonnées de ce point d'intersection dans le système sont enregistrées dans l'ordinateur et comparées aux coordonnées de ce même point d'intersection, c'est-à-dire de l'arête 13 de l'outil, dans le système de coordonnées du tour automatique. On procède aussi à un déplacement de l'outil selon l'axe X, et l'on enregistre la coordonnée en X de cette nouvelle position, que l'on compare avec la coordonnée en X dans le système du tour automatique. On procède ensuite de même pour un déplacement selon l'axe Y. De la sorte, l'ordinateur enregistre les différences entre les coordonnées de la position de l'arête de l'outil selon le système créé en fonction des données apportées par la camera et qui est centré sur l'axe du canon de guidage et les coordonnées du système du tour automatique. Le décalage peut ainsi être corrigé, soit automatiquement par commande programmée, soit manuellement par addition des différences (négatives ou positives).

Pour les outils en bout, la position du centre de l'outil ne peut être acquise de la même manière. L'ordinateur est programmé pour faire apparaître un deuxième cercle 23 plus petit et concentrique au premier cercle 14, et centré comme celui-ci sur l'origine du système de coordonnées cartésiennes. L'opérateur réduit le diamètre de ce cercle de façon qu'il touche le pourtour de l'image de l'outil. L'opérateur modifie la position de l'outil et restreint le diamètre du cercle 23, de façon à réduire au minimum possible l'espace entre le cercle et le pourtour de l'image de l'outil. La position du centre du cercle selon les coordonnées du système du tour automatique est ensuite enregistrée ainsi que la différence avec les coordonnées de cette même position selon le système créé sur la base des données de la camera, et le décalage est corrigé pour arriver à la position voulue de l'outil par rapport à l'axe du canon de guidage.

### Possibilités d'application industrielle

L'invention est applicable aux tours automatiques, dans le vaste domaine du décolletage.

## Revendications

1. Procédé de réglage optique de la position des outils de coupe (5) ou en bout (6) par rapport à l'axe central (1)de l'alésage du canon de guidage (2) de la pièce à traiter d'un tour à l'aide d'au moins une camera (3) placée sur ledit canon de guidage (2) et apte à transmettre l'image captée, **caractérisé en ce que** le tour est automatique, **en ce que** la camera (3) est pourvue d'au moins un tube d'extension (4) muni d'au moins une lentille (9) et **en ce qu'**au moins le tube d'extension est introduit dans l'alésage du canon de guidage (2) de façon qu ledit tube d'extension (4) soit dirigé vers le ou les outils de coupe (5) ou en bout (6) de façon à transmettre à la camera l'image de l'ouverture dudit canon de guidage (2) et l'image de la partie desdits outils de coupe ou en bout visible par l'ouverture du canon de guidage.

2. Dispositif optique de réglage de la position des outils de coupe ou en bout par rapport à l'axe central (1) de l'alésage du canon de guidage (2) de la pièce à traiter d'un tour automatique pour un procédé de réglage selon la revendication 1, comprenant au moins une camera (3) et un ordinateur, **caractérisé en ce que** ladite camera est pourvue d'au moins un tube d'extension (4) muni d'au moins une lentille(9) et apte à être placé dans l'alésage du canon de guidage (2), de façon que ledit tube d'extension (4) soit dirigé vers le ou les outils de coupe (5) ou en bout (6), la camera (3) étant en outre pourvue de moyens (8) aptes à transmettre audit ordinateur l'image de l'ouverture dudit canon de guidage (2) et l'image de la partie desdits outils de coupe ou en bout visible par l'ouverture du canon de guidage,ledit ordinateur étant programmé de façon à permettre l'enregistrement de la position d'au moins un point de référence de l'image de ladite ouverture du canon et à faire apparaître ledit point sur un écran, permettant ainsi le positionnement des outils par rapport audit point de référence..

3. Dispositif selon revendication 2, **caractérisé en ce** le tube d'extension (4) comprend au moins une lentille à gradient d'indice (9).

4. Dispositif selon la revendication 2 ou 3, **caractérisé en ce qu'**il comprend au moins une lentille achromate (10) placée entre le tube d'extension et la camera.

5. Dispositif selon l'une des revendications 2 à 4**, caractérisé en ce que** la camera est pourvue d'un capteur CCD.

6. Dispositif selon l'une des revendication 2 à 5, **caractérisé en ce qu'i**l comprend des moyens permettant de déplacer la camera (3) dans la direction de l'axe (7) de montage des lentilles.

7. Dispositif selon l'une des revendications 2 à 6, **caractérisé en ce que** le point de référence coïncide avec l'axe central (1) du canon de guidage.

8. Dispositif selon l'une des revendications 2 ou 7**, caractérisé en ce que** l'ordinateur est programmé de façon à afficher à l'écran une mire comprenant deux axes orthogonaux (11, 12) formant un système de coordonnées cartésiennes.

9. Dispositif selon la revendication 8, **caractérisé en ce que** l'ordinateur est programmé pour enregistrer et/ou afficher la position de l'arête tranchante (13) d'au moins un outil de coupe (5) selon le système de coordonnées cartésiennes.

10. Dispositif selon l'une des revendications 2 à 8, **caractérisé en ce que** l'ordinateur est programmé pour enregistrer et/ou afficher la position de l'axe de rotation d'au moins un outil en bout (6), et notamment d'une mèche de perçage, selon le système de coordonnées cartésiennes.

11. Dispositif selon l'une des revendications 2 à 10, **caractérisé en ce que** le point de référence est le centre d'un cercle (14) positionné de façon à être tangent ou à se superposer aux arcs de cercle (15) formés par l'image de la face intérieure des mors (20) de la pince du canon de guidage.

12. Dispositif selon la revendication 11, **caractérisé en ce que** le point de référence est le point d'origine du système de coordonnées cartésiennes.

13. Dispositif selon l'une des revendications 2 à 9, ou 11 à 12, **caractérisé en ce qu'**il comprend un éclairage à diodes électroluminescentes (16) placé derrière le ou les outils de coupe (5) par rapport à la caméra.

14. Dispositif selon la revendication 10, **caractérisé en ce qu'**il comprend un éclairage à diodes électroluminescentes, chaque diode étant placée sur un plan perpendiculaire à l'axe central (1) de l'alésage du canon de guidage, ledit plan étant situé devant l'outil en bout (6) par rapport à la caméra.

15. Dispositif selon l'une revendication 2 à 14, **caractérisé en ce que** les surfaces internes du tube d'extension (4), du jeu de lentilles (17) et du boîtier (18) de la camera (3) sont traitées de façon à minimiser les réflexions internes.

16. Dispositif selon la revendication 15, **caractérisé en ce que** le traitement de surface est l'eloxage.

17. Dispositif selon l'une des revendications 2 à 16, **caractérisé en ce qu'**il comprend au moins une douille de guidage (19) apte à entourer le bout du tube d'extension (4) et dont le diamètre extérieur correspond à l'alésage défini par les mors (20) de la pince du canon de guidage (2).

## Claims

1. Process for the optical adjustment of the position of cutting tools (5) or end tools (6), relative to the central bore axis (1) of the guide bush (2) holding the workpiece on an automatic lathe, using at least one camera (3) placed on the said guide bush (2), capable of transmitting the acquired image, **characterised in that** the lathe is automatic, that the camera (3) is equipped with at least one extension tube (4) fitted with at least one lens (9) and that at least the extension tube (4) is introduced into the bore of the guide bush (2) such that the said extension tube (4) is directed towards the cutting (5) or end (6) tool or tools such as to transmit to the camera the image of the opening of said guide bush (2) and the image of the part of said cutting tools or end tools visible through the opening of the guide bush.

2. Optical device for adjusting the position of cutting tools or end tools in relation to the central axis (1) of the bore of the guide bush (2) holding the workpiece in an automatic lathe for an adjustment process according to claim 1, comprising at least one camera (3) and a computer, **characterised in that** the said camera is equipped with at least one extension tube (4) fitted with at least one lens (9) said extension tube capable of being placed in the bore of the guide bush (2) such that said extension tube (4) is directed towards the cutting (5) or end (6) tool or tools, the camera (3) also being fitted with means (8) for transmitting to the said computer the image of the opening of said guide bush (2) and the image of the part of said cutting tools or end tools visible through the opening of the guide bush, said computer being programmed such as to enable the recording of the position of at least one reference point from the image of said opening of the bush and to show said point on a screen, thereby enabling the positioning of the tools in relation to said reference point.

3. Device according to claim 2, **characterised in that** the extension tube (4) comprises at least one gradient-index lens (9).

4. Device according to claim 2 or 3, **characterised in that** it comprises at least one achromatic lens (10) placed between the extension tube and the camera.

5. Device according to one of the claims 2 to 4, **characterised in that** the camera is fitted with a CCD sensor.

6. Device according to one of the claims 2 to 5, **characterised in that** it comprises the means to enable displacement of the camera (3) in the direction of the axis (7) of the lens mount.

7. Device according to one of the claims 2 to 6 **characterised in that** the reference point coincides with the central axis (1) of the guide bush..

8. Device according to one of the claims 2 or 7, **characterised in that** the computer is programmed so as to display on screen a pattern comprising two orthogonal axes (11, 12) forming a Cartesian coordinate system.

9. Device according to claim 8, **characterised in that** the computer is programmed to register and/or display the position of the cutting edge (13) of at least one cutting tool (5) according to the Cartesian coordinate system.

10. Device according to one of the claims 2 to 8, **characterised in that** the computer is programmed to register and/or display the position of the rotary axis of at least one end tool (6), particularly a drill, according to the Cartesian coordinate system.

11. Device according to one of the claims 2 to 10, **characterised in that** the reference point is the centre of a circle (14) positioned such as to be tangential to or superimposed on arcs of a circle (15) formed by the image of the internal surface of the jaws (20) of the guide bush workholder.

12. Device according to claim 11, **characterised in that** the reference point is the origin of the Cartesian coordinate system.

13. Device according to one of the claims 2 to 9, or 11 to 12, **characterised in that** it comprises illumination by light-emitting diodes (16) placed behind the cutting tool or tools (5) in relation to the camera.

14. Device according to claim 10, **characterised in that** it comprises illumination by light-emitting diodes, each diode being placed on a plane perpendicular to the central bore axis (1) of the guide bush, the said plane being in front of the end tool (6) in relation to the camera.

15. Device according to a claim 2 to 14, **characterised in that** the internal surfaces of the extension tube (4), the set of lenses (17) and the housing (18) of the camera (3) are treated so as to minimise internal reflection.

16. Device according to claim 15, **characterised in that** the surface treatment is anodisation.

17. Device according to one of the claims 2 to 16, **characterised in that** it comprises at least one guide sleeve (19) capable of encircling the end of the extension tube (4) the outside diameter of said guide sleeve corresponding to the bore defined by the jaws (20) of the guide bush workholder (2).

## Patentansprüche

1. Verfahren zur optischen Einstellung der Position von Schneidwerkzeugen (5) oder Stirnwerkzeugen (6) in Bezug auf die zentrale Achse (1) der Bohrung der Führungsbuchse (2) für das mit einer Drehmaschine zu bearbeitende Werkstück, mit Hilfe wenigstens einer Kamera (3), die auf der Führungsbuchse (2) angeordnet ist und das erfasste Bild übertragen kann, **dadurch gekennzeichnet, dass** die Drehmaschine automatisch ist, dass die Kamera (3) mit wenigstens einem wenigstens eine Linse (9) aufweisenden Verlängerungsrohr (4) versehen ist und dass wenigstens das Verlängerungsrohr derart in die Bohrung der Führungsbuchse (2) eingeführt wird, dass das Verlängerungsrohr (4) auf das oder die Schneidwerkzeuge (5) oder Stirnwerkzeuge (6) gerichtet ist, um an die Kamera das Bild der Öffnung der Führungsbuchse (2) und das Bild des durch die Öffnung der Führungsbuchse sichtbaren Teils der Schneid- oder Stirnwerkzeuge zu übertragen.

2. Optische Vorrichtung zur Einstellung der Position von Schneidwerkzeugen oder Stirnwerkzeugen in Bezug auf die zentrale Achse (1) der Bohrung der Führungsbuchse (2) für das mit einer automatischen Drehmaschine zu bearbeitende Werkstück, für ein Verfahren zur Einstellung nach Anspruch 1, mit wenigstens einer Kamera (3) und einem Computer, **dadurch gekennzeichnet, dass** die Kamera mit wenigstens einem Verlängerungsrohr (4) versehen ist, das wenigstens eine Linse (9) aufweist und derart in der Bohrung der Führungsbuchse (2) angeordnet werden kann, dass das Verlängerungsrohr (4) auf das oder die Schneidwerkzeuge (5) oder Stirnwerkzeuge (6) gerichtet ist, und dass die Kamera (3) außerdem mit Mitteln (8) versehen ist, die das Bild der Öffnung der Führungsbuchse (2) und das Bild des durch die Öffnung der Führungsbuchse sichtbaren Teils der Schneid- oder Stirnwerkzeuge an den Computer übertragen können, wobei der Computer derart programmiert ist, dass er die Aufzeichnung der Position wenigstens eines Referenzpunktes des Bildes der Öffnung der Buchse ermöglicht und das Erscheinen des Punktes auf einem Bildschirm, wodurch die Positionierung der Werkzeuge in Bezug auf den Referenzpunkt ermöglicht wird.

3. Vorrichtung nach Anspruch 2, **dadurch gekennzeichnet, dass** das Verlängerungsrohr (4) wenigstens eine Gradientenlinse (9) aufweist.

4. Vorrichtung nach Anspruch 2 oder 3, **dadurch gekennzeichnet, dass** sie wenigstens eine zwischen dem Verlängerungsrohr und der Kamera angeordnete achromatische Linse (10) aufweist.

5. Vorrichtung nach einem der Ansprüche 2 bis 4, **dadurch gekennzeichnet, dass** die Kamera mit wenigstens einem CCD-Sensor versehen ist.

6. Vorrichtung nach einem der Ansprüche 2 bis 5, **dadurch gekennzeichnet, dass** sie Mittel zum Bewegen der Kamera (3) in Richtung der Montageachse (7) der Linsen aufweist.

7. Vorrichtung nach einem der Ansprüche 2 bis 6, **dadurch gekennzeichnet, dass** der Referenzpunkt mit der zentralen Achse (1) der Führungsbuchse koinzidiert.

8. Vorrichtung nach einem der Ansprüche 2 bis 7, **dadurch gekennzeichnet, dass** der Computer so programmiert ist, dass er auf dem Bildschirm ein Muster mit zwei ein kartesisches Koordinatensystem bildenden orthogonalen Achsen (11, 12) anzeigt.

9. Vorrichtung nach Anspruch 8, **dadurch gekennzeichnet, dass** der Computer so programmiert ist, dass er die Position der scharfen Kante (13) wenigstens eines Schneidwerkzeugs (5) im kartesischen Koordinatensystem aufzeichnen und/oder anzeigen kann.

10. Vorrichtung nach einem der Ansprüche 2 bis 8, **dadurch gekennzeichnet, dass** der Computer so programmiert ist, dass er die Position der Rotationsachse wenigstens eines Stirnwerkzeugs (6), und insbesondere eines Bohrers, im kartesischen Koordinatensystem aufzeichnen und/oder anzeigen kann.

11. Vorrichtung nach einem der Ansprüche 2 bis 10, **dadurch gekennzeichnet, dass** der Referenzpunkt der Mittelpunkt eines Kreises (14) ist, der so positioniert ist, dass er die von dem Bild der Innenfläche der Backen (20) der Spannmittel der Führungsbuchse gebildeten Kreisbögen (15) tangiert oder sich mit diesen überlagert.

12. Vorrichtung nach Anspruch 11, **dadurch gekennzeichnet, dass** der Referenzpunkt der Ursprungspunkt des kartesischen Koordinatensystems ist.

13. Vorrichtung nach einem der Ansprüche 2 bis 9 oder 11 bis 12, **dadurch gekennzeichnet, dass** sie eine Beleuchtung mit Elektrolumineszenzdioden (16) aufweist, die bezogen auf die Kamera hinter dem oder den Schneidwerkzeugen (5) angeordnet ist.

14. Vorrichtung nach Anspruch 10, **dadurch gekennzeichnet, dass** sie eine Beleuchtung mit Elektrolumineszenzdioden aufweist, wobei jede Diode in einer zur zentralen Achse (1) der Bohrung der Führungsbuchse senkrechten Ebene angeordnet ist, wobei die Ebene bezogen auf die Kamera vor dem Stirnwerkzeug (6) angeordnet ist.

15. Vorrichtung nach einem der Ansprüche 2 bis 14, **dadurch gekennzeichnet, dass** die Innenflächen des Verlängerungsrohrs (4), des Linsensatzes (17) und des Gehäuses (18) der Kamera (3) zur Minimierung der inneren Reflexionen behandelt sind.

16. Vorrichtung nach Anspruch 15, **dadurch gekennzeichnet, dass** die Oberflächenbehandlung das Eloxieren ist.

17. Vorrichtung nach einem der Ansprüche 2 bis 16, **dadurch gekennzeichnet, dass** sie wenigstens eine Führungshülse (19) aufweist, die das Ende des Verlängerungsrohrs (4) umschließen kann und deren äußerer Durchmesser der Bohrung entspricht, die von den Backen (20) der Spannmittel des Führungsrohrs (2) definiert wird.
